# FASCICULE DE BREVET EUROPEEN

(11) **EP 2 629 274 B1**
(45) Date de publication et mention de la délivrance du brevet: **06.01.2016**
(21) Numéro de dépôt: 13155912.2
(22) Date de dépôt: 20.02.2013
(51) Int. Cl.: G08C 17/02, G08C 19/28, H04L 12/28

(54) **Procédé de fonctionnement d'une armoire de commande**
Funktionsverfahren eines Schaltschranks
Operating method of a control cabinet

(30) Priorité: 20.02.2012 FR 1251520
(43) Date de publication de la demande: 21.08.2013
(73) Titulaire: Somfy SAS, 74300 Cluses (FR)
(72) Inventeur: Girod, Stéphane, 74800 La Roche Sur Foron (FR); Espana, Frédéric, Thiez 74300 (FR); Duval, Jérôme, 74970 Marignier (FR)
(74) Mandataire: Novaimo

(56) Documents cités:
- EP-A1- 1 659 252
- EP-A1- 2 098 677
- US-A1- 2005 184 854

## Description

L'invention concerne un procédé de fonctionnement d'une armoire de commande destinée à la gestion du réglage et du fonctionnement d'un actionneur électromécanique pilotant un équipement mobile assurant le confort et/ou la sécurité dans un bâtiment, tel que par exemple un portail ou une porte d'accès, l'armoire de commande comprenant une interface de commande, des éléments d'émission de signaux et un élément de commutation de l'interface de commande. Il concerne de plus, une armoire de commande fonctionnant selon un tel procédé. Il concerne également une installation comprenant une telle armoire de commande et un actionneur électromécanique pilotant un équipement mobile de confort et/ou sécurité dans un bâtiment.

Traditionnellement, les armoires de commande comportent des touches grâce auxquelles un utilisateur ou un installateur peut interagir avec l'installation. Une partie des touches, dites touches de commande, est utilisée pour la commande de mouvement de l'équipement mobile grâce à l'actionneur. Un appui sur une de ces touches se traduit donc par l'émission d'un signal sous forme d'un ordre de commande associé à la touche vers une unité électronique associée à l'actionneur. Lorsque l'armoire de commande est associée à plusieurs actionneurs (dans le cas de portes multiples par exemple, telles que les vantaux d'un portail), l'armoire de commande gère également les délais entre des ordres successifs. Les ordres de commande peuvent être des ordres de commande de mouvement ou d'autres ordres, excluant les ordres de commande de mouvement, tels que des ordres de commande d'arrêt d'un mouvement ou des ordres de type allumage/extinction d'une charge électrique.

Une autre partie des touches, dites touches de réglage, peut être affectée uniquement à la programmation de l'actionneur. Ces touches de réglage ne sont donc traditionnellement pas utilisées dans un mode d'usage, c'est-à-dire de fonctionnement en usage de l'actionneur. Un appui sur ces touches de réglage peut également donner lieu à l'émission d'un signal, tel qu'un ordre de commande, un ordre de programmation ou tel qu'un signal d'information, donnant par exemple la valeur d'un paramètre à enregistrer par l'unité électronique de l'actionneur.

Une armoire de commande peut comprendre également des éléments de réception de signaux, permettant de recevoir des signaux de retour d'information de la part de l'actionneur et/ou de recevoir des ordres de commande provenant d'une ou plusieurs télécommandes nomades destinées à piloter l'équipement domotique. L'armoire de commande interprète ou relaie alors ces ordres de commande à l'actionneur.

Les signaux peuvent être émis sur un support filaire ou non filaire.

Les armoires de commande dans le bâtiment sont généralement placées dans des endroits accessibles depuis l'intérieur d'un bâtiment ou d'une zone, par exemple sur un pilier de portail, ou sur le montant fixe d'une porte enroulable. Pour éviter de dupliquer les interfaces, il est courant de disposer en façade de ces armoires de commande, l'ensemble des touches de commande et de réglage. Des déclenchements intempestifs ou non souhaités d'émission de signaux de réglage peuvent alors survenir. Le risque est tel qu'une personne non spécialisée peut dérégler l'installation.

Dans le domaine des télécommandes de type nomade, souvent portés dans des poches ou des sacs, ou manipulées avec peu de précautions, il est courant de verrouiller au moins une partie du clavier contre les déclenchements intempestifs. Ce verrouillage peut être réalisé par un dispositif mécanique de verrouillage tel qu'un capot de protection, ou par un dispositif électronique. Alternativement, les dispositifs de claviers numériques ou digicodes présentent également une fonction de verrouillage des fonctionnalités pour un utilisateur non autorisé. Dans ces documents, les touches de commande elles-mêmes se retrouvent alors verrouillées. Dans le cas d'un capot, celui-ci peut facilement être ouvert ou cassé, et les touches de réglage se retrouvent alors accessibles.

On connaît du document US2005/0184854 un système comprenant un dispositif de motorisation d'une porte et un dispositif d'éclairage. Il est prévu de configurer le dispositif de motorisation et le dispositif d'éclairage de sorte qu'ils puissent recevoir des ordres d'un même point de commande.

L'art antérieur connu relatif aux télécommandes ou aux claviers numériques s'applique difficilement dans le cas d'une armoire de commande, pour laquelle les touches de réglage doivent être verrouillées dans le mode de fonctionnement pour protéger l'installation tandis que les touches de commande doivent être actives dans les deux modes de fonctionnement et de réglage de l'installation.

Le but de l'invention est de fournir un procédé permettant de remédier au problème précité et d'améliorer les procédés connus de l'art antérieur. En particulier, l'invention propose un procédé permettant d'éviter les déclenchements intempestifs d'actions de réglage. En particulier, l'invention s'applique dans le cas d'une interface comprenant des touches affectées exclusivement au réglage et pour laquelle les touches de commande de l'actionneur sont les mêmes dans un mode de programmation et dans un mode de commande.

Selon l'invention, le procédé régit le fonctionnement d'une armoire de commande destinée à la commande à distance d'au moins un équipement mobile assurant le confort et/ou la sécurité dans un bâtiment. L'armoire de commande comprend une interface de commande et des éléments d'émission de signaux. Le procédé comprend au moins :
a) un mode dit de réglage, dans lequel une action sur une première touche de réglage de l'interface de l'armoire de commande, entraîne l'émission d'un premier signal de réglage associé à cette action, et
b) un mode dit de commande, dans lequel chaque action sur cette première touche de l'interface de commande entraîne l'émission d'un ordre de commande particulier, excluant les ordres de commande de mouvement de l'équipement mobile et l'émission du premier signal de réglage.

Avantageusement, l'armoire de commande comprend des touches de réglage affectées à un ou plusieurs réglages et des touches de commande, les fonctionnalités des touches de commande restant inchangées entre le mode de réglage et le mode de commande.

Avantageusement, dans le mode de réglage, l'action sur la première touche de réglage de l'interface de l'armoire de commande, entraîne l'émission du premier signal de réglage associé à cette action vers l'équipement mobile.

Avantageusement, dans le mode de commande, chaque action sur la première touche de réglage de l'interface de commande entraîne l'émission, vers l'équipement mobile, d'un ordre de commande particulier, excluant les ordres de commande de mouvement de l'équipement mobile et l'émission du premier signal de réglage.

L'ordre de commande particulier peut être un ordre de commande d'arrêt d'un mouvement de l'équipement mobile.

L'ordre de commande particulier peut être un ordre de commande de type allumage d'une charge électrique, notamment une lampe.

Dans le mode de commande, une action sur une deuxième touche de réglage peut n'entraîner aucune émission de signal de réglage ou d'ordre de commande.

Dans le mode de commande, une action sur une troisième touche de réglage peut assurer le passage du mode de commande au mode de réglage.

Une action sur une touche de commande de l'interface de l'armoire de commande peut entraîner l'émission d'un ordre de commande dans le mode de réglage et dans le mode de commande.

Le passage vers le mode de commande peut comprendre une séquence particulière d'actions sur l'interface de commande et/ou une action sur une touche de réglage dédiée et/ou une action sur une clé physique coopérant avec une serrure de l'armoire de commande.

Une transition du mode de réglage au mode de commande peut avoir lieu à l'échéance d'une temporisation déclenchée par une action sur l'interface de commande, alors qu'aucune autre action n'a été exercée sur l'interface de commande durant cette temporisation.

L'invention porte aussi sur un support d'enregistrement de données lisible par un calculateur sur lequel est enregistré un programme d'ordinateur comprenant des moyens logiciels de mise en oeuvre des étapes du procédé défini précédemment.

Selon l'invention, l'armoire de commande comprend des éléments matériels et/ou logiciels de mise en oeuvre du procédé défini précédemment.

Les éléments matériels et/ou logiciels peuvent comprendre une unité de traitement, une mémoire, des éléments d'émission de signaux, une interface de commande et un élément de commutation de l'interface de commande assurant au moins le passage du mode de réglage vers le mode de commande.

Les éléments matériels et/ou logiciels peuvent comprendre des éléments de réception de signaux et les éléments d'émission de signaux et les éléments de réception de signaux peuvent être des éléments distincts, en lien avec des supports distincts.

Selon l'invention, une installation comprend au moins un actionneur électromécanique, au moins un équipement équipant un bâtiment et une armoire de commande définie précédemment.

L'armoire de commande peut comprendre des éléments de réception de signaux et l'installation peut comprendre un émetteur d'ordres nomade, destiné à transmettre des ordres de commande à l'armoire de commande.

Le changement de fonctionnalité des touches de réglage se fait ainsi par commutation sur un mode de commande, dans lequel tout ou partie des touches de réglage devient une touche d'arrêt, voire d'arrêt d'urgence. Cette commutation peut également inclure un verrouillage, celui-ci consistant à inactiver les émissions de signaux de réglage lors d'un appui sur certaines touches de réglage, sans toutefois bloquer la ou les autres touches qui servent alors à l'arrêt d'urgence. Dans ce mode, un appui involontaire sur le clavier n'aura pour conséquence qu'un arrêt du mouvement en cours piloté par l'actionneur. Au mieux, dans une situation de panique, cet arrêt du mouvement pourra être un arrêt d'urgence, ce qui apporte une sécurité supplémentaire à l'installation. Le déverrouillage et le retour en mode de réglage rend le clavier entièrement actif pour effectuer une commande et un réglage.

L'ordre de commande émis par appui sur la première touche dans le mode de commande peut être un ordre de commande de type allumage d'une charge électrique, notamment une lampe. Le changement de fonctionnalité des touches de réglage se fait ainsi par commutation sur un mode de commande, dans lequel tout ou partie des touches de réglage devient une touche permettant d'allumer une lampe, associée ou non à l'équipement. Par exemple, dans le cas d'un portail motorisé comprenant un feu orange de signalisation, un appui sur la première touche dans un mode de commande permettra d'allumer le feu de signalisation, au moins pendant une durée déterminée. Cette nouvelle fonctionnalité permet à un utilisateur d'éclairer la zone de l'armoire de commande notamment, y compris lorsqu'il tâtonne dans le noir.

Le dessin annexé représente, à titre d'exemple, un mode d'exécution du procédé selon l'invention.
La figure 1 est un schéma d'une installation domotique comprenant un premier mode de réalisation d'une armoire de commande selon l'invention.
La figure 2 est un schéma d'une interface homme-machine du premier mode de réalisation d'une armoire de commande selon l'invention.
La figure 3 est un ordinogramme d'un premier mode de fonctionnement du premier mode de réalisation de l'armoire de commande selon l'invention.
La figure 4 est un ordinogramme d'un deuxième mode de fonctionnement du premier mode de réalisation de l'armoire de commande selon l'invention.
La figure 5 est un ordinogramme illustrant les transitions entre le premier mode de fonctionnement et le deuxième mode de fonctionnement.

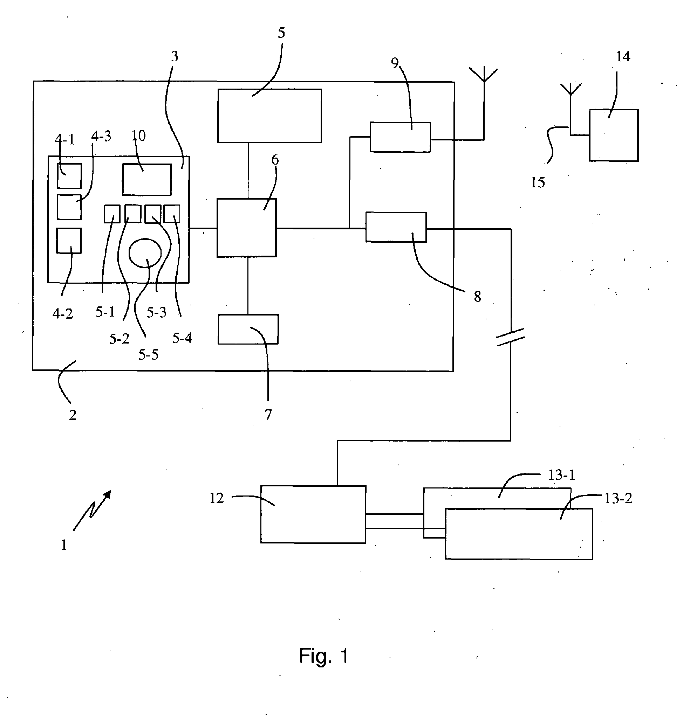

L'armoire de commande 2 représentée à la figure 1 consiste en une armoire 2 comprenant une interface homme-machine 3 comprenant un clavier muni de touches 4-1 à 4-3, dites touches de commande et de touches 5-1 à 5-4, dites touches de programmation ou de réglage. Ces touches peuvent être des touches mécaniques ou virtuelles, par exemple dans le cas d'un écran tactile servant de clavier. L'armoire de commande 2 comprend en outre une unité de traitement 6, une mémoire 7, des éléments d'émission de signaux 8, des éléments de réception de signaux 9 et un élément 5 de commutation des fonctions du clavier ou de commutation des modes de fonctionnement de l'interface. L'interface homme-machine 3 comprend également un dispositif d'affichage 10, par exemple des diodes électroluminescentes ou un écran de type à cristaux liquides.

L'interface peut comprendre des touches affectées exclusivement à un réglage et des touches de commande.

L'armoire de commande 2 est destinée à commander un ou plusieurs actionneurs 12 liés à un ou des équipements domotiques 13-1, 13-2 équipant un bâtiment. Ces équipements peuvent par exemple comprendre en une porte de garage ou un portail ou un volet roulant ou un store.

L'installation 1 représentée en figure 1 comprend outre l'armoire de commande 2 et l'ensemble actionneur-équipement 12, 13-1, 13-2, un émetteur nomade 14 muni de éléments d'émission d'ordres 15.

Sur la figure 1, le lien entre l'armoire de commande, notamment entre les éléments d'émission des signaux 8 et l'actionneur 12, est un lien filaire, tandis que le lien entre l'émetteur et l'armoire de commande, notamment le lien entre l'émetteur et les éléments de réception de signaux de l'armoire de commande, est un lien sans fil, par exemple radio. Les éléments d'émission 8 et de réception peuvent ainsi être des éléments distincts ou peuvent utiliser des medias communs.

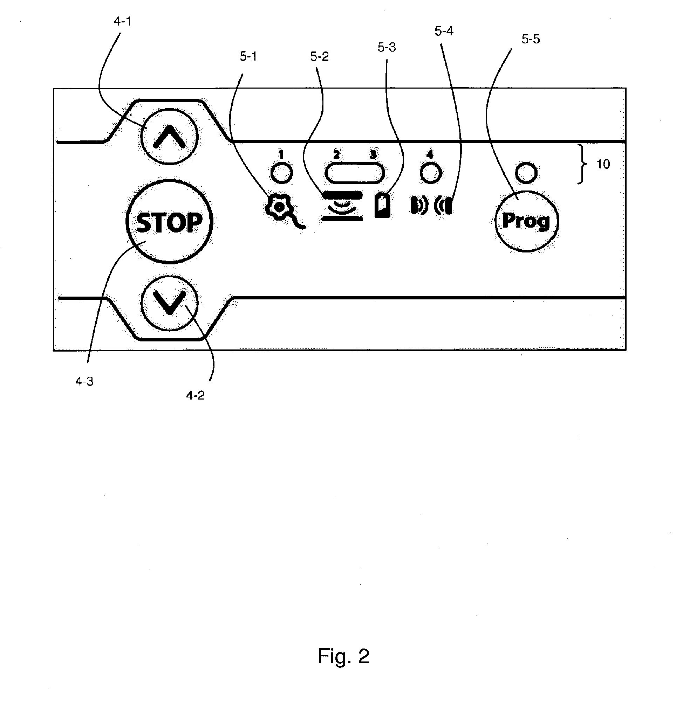

Comme illustré en figures 1 et 2, les touches 4-1 à 4-3 sont des touches de commande. Chaque touche de commande peut servir à l'émission d'un ordre unique de mouvement (d'ouverture, de fermeture ou de déplacement vers une position intermédiaire préenregistrée) ou d'un autre typé (ordre d'arrêt d'un équipement motorisé par exemple ou ordre d'allumage d'une lampe ou ordre d'extinction d'une lampe). Alternativement ou de manière complémentaire, les touches sont affectées à un équipement particulier.

Des touches de réglage, peuvent se trouver sur l'interface de commande à proximité des touches de commande. Il s'agit par exemple d'une touche 5-5 de programmation, ou d'autres touches de réglage 5-1 à 5-4. Les touches de réglage sont plus particulièrement destinées à la programmation de l'installation, notamment des paramètres de fonctionnement du ou des actionneurs et équipements par un installateur, celui-ci étant une personne compétente pour le réglage, éventuellement un professionnel.

Dans un premier mode de fonctionnement de l'armoire de commande, dit mode de réglage ou mode installateur, lorsqu'on appuie sur l'une des touches de commande de l'interface de commande, l'armoire de commande émet un ordre correspondant à l'appui en direction de l'équipement concerné. Celui-ci exécute alors l'ordre qui lui est donné. De plus, lors d'un appui sur une touche de réglage, l'armoire de commande émet un signal de réglage en direction de l'équipement concerné, par exemple un signal d'enregistrement d'un paramètre. L'actionneur enregistre ou fournit alors le paramètre demandé.

Dans ce premier mode de fonctionnement, l'ensemble des touches de commande et de réglage est disponible pour l'installateur. Cela permet de simplifier l'interface de l'armoire de commande, dans la mesure où il n'est pas nécessaire de dupliquer les touches de commande sur une interface spécifique au réglage.

Dans ce premier mode de fonctionnement de l'armoire de commande, lors d'un appui sur l'une des touches de commande de l'interface de commande, l'armoire de commande émet un ordre, notamment un ordre de mouvement ou un ordre d'arrêt, en direction de l'équipement concerné.

Une étape de commutation est mise en oeuvre pour le passage du premier à un deuxième mode de fonctionnement, dit mode de commande ou mode utilisateur. Cette commutation a pour objet un changement de fonctionnalités du clavier, notamment des touches de réglage, consistant à affecter à une ou plusieurs touches de réglage une fonction de commande particulière, excluant les fonctions de commande mettant en oeuvre un mouvement de l'élément mobile et l'émission de signaux de réglage. Cette nouvelle fonction particulière peut être une fonction d'arrêt et/ou une fonction d'allumage d'une charge électrique.

La fonction d'arrêt consiste en ce que, dans le mode utilisateur, les touches de réglage auxquelles elle est affectée servent pour la commande d'arrêt du mouvement des équipements mobiles. Ainsi, une action sur une de ces touches dans un mode de commande est interprétée par l'armoire de commande comme un ordre d'arrêt du mouvement piloté par l'actionneur, par exemple un arrêt du mouvement de la porte de garage. L'armoire de commande émet alors un ordre d'arrêt vers l'actionneur. Cet ordre d'arrêt est sans effet lorsque l'actionneur est déjà à l'arrêt, mais il stoppe le mouvement si celui-ci est en cours. Cette nouvelle fonctionnalité vient en supplément par rapport à la fonction d'arrêt affectée à l'une des touches de commande (touche 4-3). Les fonctionnalités des touches de commande restent donc inchangées entre le mode utilisateur et le mode installateur.

La fonction d'allumage d'une charge électrique consiste en ce que, dans le mode utilisateur, les touches de réglage auxquelles elle est affectée servent pour alimenter une charge, associée ou non à l'équipement, notamment pour allumer une lampe. Ainsi une action sur ces touches dans un mode de commande est interprétée par l'armoire de commande comme un ordre d'allumage de la lampe. L'armoire de commande émet alors un ordre d'allumage vers une lampe, en utilisant les liaisons avec l'actionneur, par exemple les connexions filaires, lorsque la lampe est un feu périphérique de l'installation, ou en utilisant par exemple des liaisons sans fil, par exemple radio, lorsque la lampe est distincte de l'installation. Avantageusement, la ou les touches auxquelles n'est pas affectée cette fonction de commande particulière changent également de fonctionnalité et sont dites verrouillées, c'est-à-dire que lorsque ces touches verrouillées sont actionnées, elles ne fournissent pas ni le signal de réglage correspondant à leur fonction première dans le mode installateur, ni aucun autre signal.

L'étape de verrouillage est automatiquement mise en oeuvre lors du changement du mode de réglage au mode de commande.

Le verrouillage et la commutation à une fonction de commande particulière des touches peuvent être simultanés. Alternativement, la commutation des touches de réglage vers une fonctionnalité de commande particulière est gérée avant ou après le verrouillage des touches de réglage.

Toutes les touches de réglage de l'interface de commande peuvent ainsi changer de fonctionnalité entre le mode de réglage et le mode de commande.

Alternativement, dans le mode de commande, on conserve au moins une touche de réglage dont le fonctionnement reste inchangé par rapport au mode de réglage. Ainsi, cette touche de commande peut servir, voire être dédiée, à la commutation d'un mode à l'autre. Préférentiellement, cette touche de réglage est une touche plus difficilement accessible, par exemple elle peut être actionnée uniquement avec un outil fin ou la pointe d'un stylo.

L'armoire de commande comprend tous les éléments matériels et/ou logiciels permettant de régir son fonctionnement conformément au procédé selon l'invention. Les éléments matériels et/ou logiciels comprennent en particulier des éléments d'interprétation des actions exercées sur l'interface homme-machine et des éléments de modification des interprétations en fonction des modes de fonctionnement de l'armoire de commande. Les éléments matériels et/ou logiciels peuvent comprendre des modules logiciels, notamment des programmes d'ordinateur.

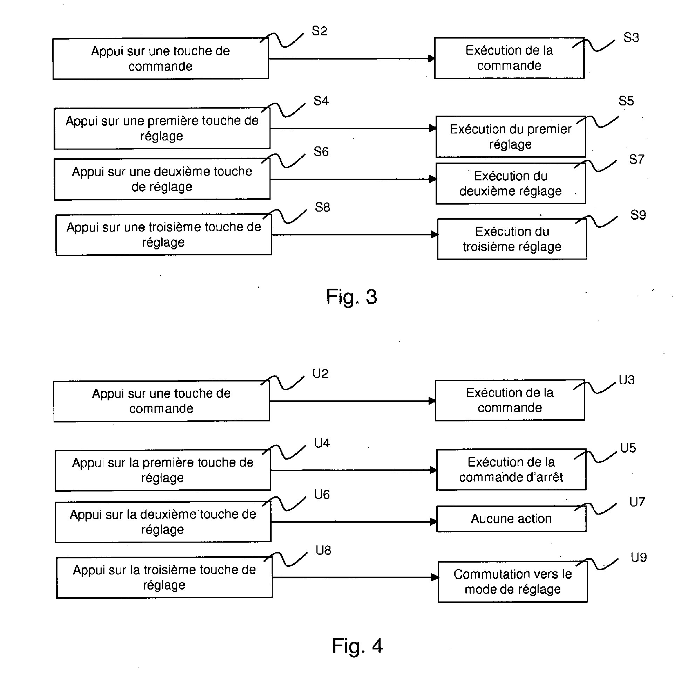

Les figures 3 et 4 représentent sous forme schématique, un mode d'exécution d'un procédé de fonctionnement selon l'invention et le fonctionnement de l'armoire de commande selon les deux modes de fonctionnement conformément à un tel procédé. Dans cet exemple trois touches de réglage ont un fonctionnement différent.

Dans le premier mode de fonctionnement, ou mode de réglage, un appui sur l'une des touches de commande à l'étape S2 entraîne la transmission et l'exécution d'un ordre de commande à l'étape S3.
Un appui sur une première touche de réglage à l'étape S4 entraîne l'exécution d'un premier réglage à l'étape S5.
Un appui sur une deuxième touche de réglage à l'étape S6 entraîne l'exécution d'un deuxième réglage à l'étape S7.
Un appui sur une troisième touche de réglage à l'étape S8 entraîne la commutation vers le mode de commande à l'étape S9.

Dans le deuxième mode de fonctionnement, ou mode utilisateur, un appui sur l'une des touches de commande à l'étape U2 entraîne la transmission et l'exécution d'un ordre de commande à l'étape U3.
Un appui sur la première touche de réglage à l'étape U4 entraîne l'exécution d'une commande d'arrêt à l'étape U5.
Un appui sur la deuxième touche de réglage à l'étape U6 n'entraîne aucune transmission de signal à l'étape U7.

Un appui sur la troisième touche de réglage à l'étape U8 entraîne la commutation vers le mode de réglage à l'étape U9.

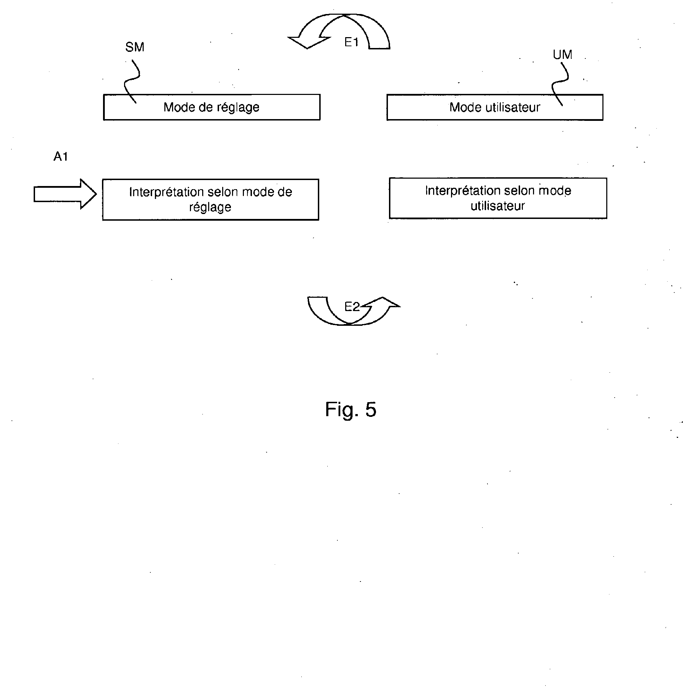

La figure 5 illustre de manière schématique le passage d'un mode de fonctionnement à un autre.

Dans un premier mode de réglage SM, l'installateur a accès à l'ensemble des touches de l'interface de l'armoire de commande pour mettre en oeuvre le réglage du ou des actionneurs de l'installation. En particulier certaines opérations de réglage nécessitent que l'actionneur pilote l'équipement mobile sur tout ou partie de sa course entre deux positions extrêmes. Pour mettre en oeuvre ce mouvement, l'utilisateur peut utiliser les touches de commande de mouvement 4-1, 4-2, 4-3 disponibles sur l'interface et les touches de réglage 5-1 à 5-5. Lorsque l'installateur a terminé ses opérations de réglage, une action représentée par la flèche E1, par exemple une ergonomie particulière sur les touches du clavier, de type séquence d'appuis, appuis successifs ou prolongés, l'actionnement d'un bouton séparé, ou la fin d'une temporisation après la dernière opération de réglage effectuée, permet de faire basculer l'armoire de commande du mode installateur SM dans un mode utilisateur UM. Alternativement, une touche spécifique de commutation est utilisée.

Dans ce mode utilisateur, une action, par exemple un appui sur une touche, représenté par la flèche A1, est interprétée en fonction du mode dans lequel se trouve l'armoire de commande au moment de l'appui.

Dans le mode utilisateur, une nouvelle action représentée par la flèche E2, par exemple une ergonomie particulière sur les touches du clavier, de type séquence d'appuis, appuis successifs ou prolongés, l'actionnement d'une touche spécifique, permet de faire basculer l'armoire de commande du mode utilisateur UM dans un mode de réglage SM.

L'invention s'applique de préférence à des armoires de commande ayant une position fixe, comme par exemple des armoires de commandes montées sur un pilier ou un mur. En effet, contrairement à des émetteurs d'ordres nomades ou télécommandes, les appuis intempestifs sur les touches du clavier ne proviennent pas d'appuis involontaires, dans un sac ou un vide-poche par exemple. Ils sont en général le fruit d'une manipulation sans précaution, d'une manipulation en situation de panique ou d'une manipulation par une personne non qualifiée. La transmission d'un ordre d'arrêt pourrait dans le cas d'un émetteur nomade se révéler gênante (par exemple si un utilisateur en sortant de chez lui déclenche volontairement la fermeture de son portail, puis involontairement son arrêt). Au contraire dans le cas d'une armoire de commande fixe monté à proximité de l'équipement, par exemple du vantail d'un portail ou d'une porte enroulable, la commande d'arrêt par appui sur une touche de réglage en mode utilisateur est une commande d'arrêt avec contrôle visuel ou commande « homme-mort », ou une commande d'arrêt d'urgence.

Alternativement, si une fonctionnalité de commande particulière est une fonction d'allumage d'une lampe, cela offre l'avantage d'éclairer la zone où se situe l'armoire de commande, pour permettre une meilleure visibilité et éviter des commandes malencontreuses.

## Revendications

1. Procédé de fonctionnement d'une armoire de commande (2) destinée à la commande à distance d'au moins un équipement mobile (12) assurant le confort et/ou la sécurité dans un bâtiment, l'armoire de commande comprenant :
- une interface de commande (3) comprenant :
o des touches de réglage affectées à un ou plusieurs réglages, et
o des touches de commande,
et
- des éléments d'émission de signaux (8), **caractérisé en ce qu'il** comprend au moins :
a) un mode dit de réglage, dans lequel une action sur une première touche de réglage de l'interface de l'armoire de commande, entraîne l'émission d'un premier signal de réglage associé à cette action, et
b) un mode dit de commande, dans lequel chaque action sur cette première touche de réglage de l'interface de commande entraîne l'émission d'un ordre de commande particulier, excluant les ordres de commande de mouvement de l'équipement mobile et l'émission du premier signal de réglage,
les fonctionnalités des touches de commande restant inchangées entre le mode de réglage et le mode de commande.

2. Procédé de fonctionnement selon la revendication 1, **caractérisé en ce que** l'ordre de commande particulier est un ordre de commande d'arrêt d'un mouvement de l'équipement mobile.

3. Procédé de fonctionnement selon la revendication 1, **caractérisé en ce que** l'ordre de commande particulier est un ordre de commande de type allumage d'une charge électrique, notamment une lampe.

4. Procédé de fonctionnement selon l'une des revendications précédentes, **caractérisé en ce que**, dans le mode de commande, une action sur une deuxième touche de réglage n'entraîne aucune émission de signal de réglage ou d'ordre de commande.

5. Procédé de fonctionnement selon l'une des revendications précédentes, **caractérisé en ce que** dans le mode de commande, une action sur une troisième touche de réglage assure le passage du mode de commande au mode de réglage.

6. Procédé de fonctionnement selon l'une des revendications précédentes, **caractérisé en ce qu'**une action sur une touche de commande de l'interface de l'armoire de commande entraîne l'émission d'un ordre de commande dans le mode de réglage et dans le mode de commande.

7. Procédé de fonctionnement selon l'une des revendications précédentes, **caractérisé en ce que** le passage vers le mode de commande comprend une séquence particulière d'actions sur l'interface de commande (3) et/ou une action sur une touche de réglage dédiée et/ou une action sur une clé physique coopérant avec une serrure de l'armoire de commande.

8. Procédé de fonctionnement selon l'une des revendications précédentes, **caractérisé en ce qu'**une transition du mode de réglage au mode de commande a lieu à l'échéance d'une temporisation déclenchée par une action sur l'interface de commande, alors qu'aucune autre action n'a été exercée sur l'interface de commande durant cette temporisation.

9. Support d'enregistrement de données lisible par un calculateur sur lequel est enregistré un programme d'ordinateur comprenant des moyens logiciels de mise en oeuvre des étapes du procédé selon l'une des revendications précédentes.

10. Armoire de commande (2) comprenant des éléments matériels et/ou logiciels de mise en oeuvre du procédé selon l'une des revendications 1 à 8.

11. Armoire de commande (2) selon la revendication précédente, **caractérisée en ce que** les éléments matériels et/ou logiciels comprennent une unité de traitement (6), une mémoire (7), des éléments d'émission de signaux (8), une interface de commande (3) et un élément de commutation de l'interface de commande assurant au moins le passage du mode de réglage vers le mode de commande.

12. Armoire de commande (2) selon la revendication 10 ou 11, **caractérisé en ce que** les éléments matériels et/ou logiciels comprennent des éléments de réception de signaux (9) et **en ce que** les éléments d'émission de signaux et les éléments de réception de signaux sont des éléments distincts, en lien avec des supports distincts.

13. Installation (1) comprenant au moins un actionneur électromécanique (12) et au moins un équipement équipant un bâtiment, **caractérisée en ce qu'**elle comprend une armoire de commande (2) selon l'une des revendications 10 à 12.

14. Installation (1) selon la revendication précédente, **caractérisée en ce que** l'armoire de commande comprend des éléments de réception de signaux et **en ce que** l'installation comprend un émetteur d'ordres nomade (14), destiné à transmettre des ordres de commande à l'armoire de commande.

## Patentansprüche

1. Verfahren zum Betrieb eines Schaltschranks (2) zur Fernsteuerung mindestens eines beweglichen Geräts (12), das den Komfort und/oder die Sicherheit in einem Gebäude gewährleistet, wobei der Schaltschrank umfasst:
- eine Steuerschnittstelle (3), umfassend:
∘ Einstelltasten, die einer oder mehreren Einstellungen zugeordnet sind, und
∘ Steuertasten
und
- Elemente zum Senden von Signalen (8), **dadurch gekennzeichnet, dass** es mindestens umfasst:
a) einen Einstellmodus, bei dem eine Einwirkung auf eine erste Steuertaste der Schnittstelle des Schaltschranks zur Sendung eines ersten Stellsignals, das mit dieser Einwirkung verknüpft ist, führt, und
b) einen so genannten Steuermodus, bei dem jede Einwirkung auf die erste Steuertaste der Schnittstelle zum Senden eines bestimmten Steuerbefehls führt, wobei Steuerbefehle zum Bewegen des mobilen Geräts und das Senden des ersten Steuersignals ausgeschlossen sind,
wobei die Funktionen der Steuertasten zwischen dem Einstellmodus und dem Befehlsmodus unverändert bleiben.

2. Betriebsverfahren nach Anspruch 1, **dadurch gekennzeichnet, dass** das bestimmte Steuersignal ein Steuersignal zum Anhalten einer Bewegung des mobilen Geräts ist.

3. Betriebsverfahren nach Anspruch 1, **dadurch gekennzeichnet, dass** das bestimmte Steuersignal ein Steuersignal des Typs zum Einschalten einer elektrischen Last, insbesondere einer Lampe, ist.

4. Betriebsverfahren nach einem der vorhergehenden Ansprüche, **dadurch gekennzeichnet, dass** im Steuermodus eine Einwirkung auf eine zweite Einstelltaste nicht das Senden eines Steuersignals oder eines Steuerbefehls auslöst.

5. Betriebsverfahren nach einem der vorhergehenden Ansprüche, **dadurch gekennzeichnet, dass** im Steuermodus eine Einwirkung auf eine dritte Einstelltaste den Übergang vom Steuermodus in den Einstellmodus gewährleistet.

6. Betriebsverfahren nach einem der vorhergehenden Ansprüche, **dadurch gekennzeichnet, dass** eine Einwirkung auf eine Taste zur Steuerung der Schnittstelle des Schaltschranks das Senden eines Steuerbefehls im Einstellmodus und im Steuermodus auslöst.

7. Betriebsverfahren nach einem der vorhergehenden Ansprüche, **dadurch gekennzeichnet, dass** der Übergang zum Befehlsmodus eine bestimmte Abfolge von Einwirkungen auf die Steuerschnittstelle (3) und/oder eine Einwirkung auf eine dedizierte Einstelltaste und/oder eine Einwirkung auf einen physikalischen Schlüssel, der mit einem Schloss des Schaltschranks zusammenwirkt, umfasst.

8. Betriebsverfahren nach einem der vorhergehenden Ansprüche, **dadurch gekennzeichnet, dass** ein Übergang von Einstellmodus zum Befehlsmodus zum Zeitpunkt einer Verzögerung stattfindet, die durch eine Einwirkung auf die Steuerschnittstelle ausgelöst wird, obwohl während dieser Verzögerung keine andere Einwirkung auf die Steuerschnittstelle ausgeübt wurde.

9. Träger zur Aufzeichnung von Daten, der von einem Rechner lesbar ist, auf welchen ein Computerprogramm aufgezeichnet ist, das Software-Mittel zur Durchführung der Verfahrensschritte nach einem der vorhergehenden Ansprüche aufweist.

10. Schaltschrank (2), der Hardware- und/oder Softwarekomponenten zur Durchführung des Verfahrens nach einem der Ansprüche 1 bis 8 aufweist.

11. Schaltschrank (2) nach dem vorhergehenden Anspruch, **dadurch gekennzeichnet, dass** die Hardware- und/oder Softwarekomponenten eine Verarbeitungseinheit (6), einen Speicher (7), Komponenten zum Senden von Signalen (8), eine Steuerschnittstelle (3) und ein Schaltelement der Steuerschnittstelle, das mindestens den Übergang vom Einstellmodus zum Steuermodus gewährleistet, aufweisen.

12. Schaltschrank (2) nach Anspruch 10 oder 11, **dadurch gekennzeichnet, dass** die Hardware- und/oder Softwarekomponenten Komponenten zum Empfang von Signalen (9) aufweisen und dass die Komponenten zum Senden von Signalen und die Komponenten zum Empfangen von Signalen unterschiedliche Komponenten sind, die mit unterschiedlichen Trägern in Verbindung stehen.

13. Einrichtung (1), umfassend mindestens einen elektromechanischen Antrieb (12) und mindestens ein Gerät, das ein Gebäude ausrüstet, **dadurch gekennzeichnet, dass** sie einen Schaltschrank (2) nach einem der Ansprüche 10 bis 12 aufweist.

14. Einrichtung (1) nach dem vorhergehenden Anspruch, **dadurch gekennzeichnet, dass** der Schaltschrank Komponenten zum Empfang von Signalen aufweist und dass die Einrichtung einen tragbaren Befehlsgeber (14) aufweist, der dazu dient, Steuerbefehle an den Schaltschrank zu übertragen.

## Claims

1. Operating method for a control **cabinet** (2) intended to remotely control at least one mobile equipment item (12) ensuring comfort and/or security in a building, the control cabinet comprising:
- a control interface (3) comprising:
• setting keys assigned to one or more settings, and
• control keys,
and
- signal transmission elements (8), **characterized in that** it comprises at least:
a) a so-called setting mode, in which an action on a first setting key of the interface of the control cabinet leads to the transmission of a first setting signal associated with this action,
and
b) a so-called control mode, in which each action on this first setting key of the control interface leads to the transmission of a particular control command, excluding the movement control commands for the mobile equipment item and the transmission of the first setting signal,
the functionalities of the control keys remaining unchanged between the setting and the control mode.

2. Operating method according to Claim 1, **characterized in that** the particular control command is a control command to stop a movement of the mobile equipment item.

3. Operating method according to Claim 1, **characterized in that** the particular control command is a control command of the type to switch on an electrical load, notably a lamp.

4. Operating method according to one of the preceding claims, **characterized in that**, in the control mode, an action on a second setting key does not lead to any transmission of a setting signal or of a control command.

5. Operating method according to one of the preceding claims, **characterized in that**, in the control mode, an action on a third setting key ensures the switch from the control mode to the setting mode.

6. Operating method according to one of the preceding claims, **characterized in that** an action on a control key of the interface of the control cabinet leads to the transmission of a control command in the setting mode and in the control mode.

7. Operating method according to one of the preceding claims, **characterized in that** the switch to the control mode comprises a particular sequence of actions on the control interface (3) and/or an action on a dedicated setting key and/or an action on a physical key cooperating with a lock of the control cabinet.

8. Operating method according to one of the preceding claims, **characterized in that** a transition from the setting mode to the control mode takes place on expiry of a time delay triggered by an action on the control interface, when no other action has been exerted on the control interface during this time delay.

9. Computer-readable data storage medium on which is stored a computer program comprising software means for implementing the steps of the method according to one of the preceding claims.

10. Control cabinet (2) comprising hardware and/or software elements for implementing the method according to one of Claims 1 to 8.

11. Control cabinet (2) according to the preceding claim, **characterized in that** the hardware and/or software elements comprise a processing unit (6), a memory (7), signal transmission elements (8), a control interface (3) and a switching element for the control interface ensuring at least the switch from the setting mode to the control mode.

12. Control cabinet (2) according to Claim 10 or 11, **characterized in that** the hardware and/or software elements comprise signal reception elements (9) and **in that** the signal transmission elements and the signal reception elements are distinct elements, linked with distinct media.

13. Installation (1) comprising at least one electromechanical actuator (12) and at least one equipment item with which a building is equipped, **characterized in that** it comprises a control cabinet (2) according to one of Claims 10 to 12.

14. Installation (1) according to the preceding claim, **characterized in that** the control cabinet comprises signal reception elements and **in that** the installation comprises a **roaming** command transmitter (14), intended to transmit control commands to the control cabinet.
